# FASCICULE DE BREVET EUROPEEN

(11) **EP 2 369 699 B1**
(45) Date de publication et mention de la délivrance du brevet: **31.12.2014**
(21) Numéro de dépôt: 11290095.6
(22) Date de dépôt: 17.02.2011
(51) Int. Cl.: H02B 1/42

(54) **Coffret ou tableau de distribution électrique comportant un rail de montage d'appareillages électriques amovible**
Elektrischer Verteiler- oder Schaltkasten, der eine entfernbare Schienenauflagerung für die Montage von elektrischen Geräten umfasst
Power distribution box or panel comprising a removable rail for mounting electrical switchgear

(30) Priorité: 22.03.2010 FR 1001119
(43) Date de publication de la demande: 28.09.2011
(73) Titulaire: Legrand France, 87000 Limoges (FR)
(72) Inventeur: Baudou, Alain, 87000 Limoges (FR)
(74) Mandataire: Orsini, Fabienne

(56) Documents cités:
- EP-A1- 1 693 937
- NL-C2- 2 001 222

## Description

La présente invention concerne de manière générale les coffrets et tableaux de distribution électrique.

Elle concerne plus particulièrement un châssis de coffret ou tableau de distribution électrique tel que défini dans le préambule de la revendication 1.

Elle concerne également un coffret ou tableau de distribution électrique comportant un châssis tel que précité sur lequel est fixé un rail de montage d'appareillages électriques modulaires.

### ARRIÈRE-PLAN TECHNOLOGIQUE

Dans les coffrets et tableaux de distribution électrique du type précité, il est généralement prévu au moins deux rails de montage positionnés parallèlement et à distance l'un de l'autre pour porter des appareillages électriques modulaires sur deux rangées d'appareillages espacées l'une de l'autre.

Les entrées de conducteurs électriques des appareillages électriques modulaires de l'une des rangées sont alors tournées vers l'autre rangée. Or, la distance laissée libre entre les deux rangées est généralement réduite, de l'ordre de 40 à 90 millimètres.

Par conséquent, ces entrées de conducteurs électriques sont non seulement difficilement visualisables, mais en outre difficilement accessibles lorsque l'on souhaite y brancher des conducteurs électriques relativement rigides. Le branchement des conducteurs électriques dans les appareillages électriques modulaires étant dès lors complexe à réaliser, la connexion électrique qui en résulte est souvent de piètre qualité et génère des pertes résistives et des échauffements importants.

Une solution connue pour faciliter le branchement des conducteurs électriques, par exemple exposée dans le document NL2001222, consiste alors à monter chaque rail de montage de manière amovible dans le coffret ou tableau de distribution électrique, en utilisant par exemple un châssis de coffret de distribution électrique du type précité.

Grâce au levier de manoeuvre des supports de rail de ce châssis, il est possible d'extraire le rail de montage hors du coffret ou tableau de distribution électrique afin de dégager les entrées des appareillages électriques modulaires qu'il porte lorsque l'on souhaite y connecter des conducteurs électriques.

L'inconvénient de ces supports de rail est que, pour extraire le rail de montage hors du coffret ou tableau de distribution électrique, il est nécessaire simultanément, d'une part, d'appuyer sur les leviers de manoeuvre des deux supports de rail selon deux directions différentes, et, d'autre part, de tirer le rail de montage suivant une troisième direction de manière que ses languettes sortent de leurs logements d'accueil.

Ces opérations simultanées sont difficiles à réaliser, ce qui en pratique risque de dissuader l'installateur d'extraire les rails de montage hors du coffret ou tableau de distribution électrique pour brancher les conducteurs électriques dans les appareillages électriques modulaires.

### OBJET DE L'INVENTION

Afin de remédier à l'inconvénient précité de l'état de la technique, on propose selon l'invention un châssis de coffret ou tableau de distribution électrique agencé pour faciliter l'extraction du rail de montage.

Plus particulièrement, on propose selon l'invention un châssis tel que défini dans la revendication 1.

Ainsi, grâce à l'invention, les deux opérations d'appui sur les leviers de manoeuvre et d'extraction du rail de montage hors du coffret ou tableau de distribution électrique peuvent être réalisées en deux opérations distinctes et successives.

L'appui sur les leviers de manoeuvre provoque en effet non seulement le déverrouillage des moyens d'encliquetage, mais en outre l'éjection des languettes du rail de montage, si bien que lorsque l'installateur relâche les leviers de manoeuvre, les moyens d'encliquetage ne viennent pas se raccrocher aux languettes du rail de montage. Par conséquent, le démontage du rail de montage est réalisé en appuyant sur les leviers de manoeuvre, puis, après que les leviers ont été relâchés, en tirant le rail de montage hors du coffret ou tableau de distribution électrique.

D'autres caractéristiques avantageuses et non limitatives du châssis de tableau ou coffret de distribution électrique conforme à l'invention sont définies dans les revendications 2 à 7.

L'invention concerne également un coffret ou tableau de distribution électrique tel que défini dans la revendication 8.

D'autres caractéristiques avantageuses et non limitatives du coffret ou tableau de distribution électrique conforme à l'invention sont définies dans les revendications 9 à 14.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective d'une extrémité d'un rail de montage d'appareillages électriques modulaires ;
- la figure 2 est une vue schématique en perspective d'un support de rail d'un châssis de coffret de distribution électrique selon l'invention ;
- la figure 3 est une vue schématique éclatée du support de rail de la figure 2 et de l'extrémité du rail de montage de la figure 1 ;
- la figure 4 est une vue schématique assemblée du support de rail de la figure 2 et de l'extrémité du rail de montage de la figure 1 ;
- les figures 5 et 6 sont des vues schématiques en coupe selon le plan A-A de la figure 4, illustrant les étapes d'extraction du rail de montage de la figure 1 hors du support de rail de la figure 2.

Un coffret ou tableau de distribution électrique est un appareil électrique qui permet, d'une part, de répartir le courant provenant d'un réseau électrique extérieur vers chacun des circuits du réseau électrique local d'une habitation, et, d'autre part, de couper l'alimentation de ces circuits en cas de surintensité.

Ce coffret ou tableau de distribution électrique se présente généralement sous la forme d'un boîtier logeant des appareillages électriques modulaires, tels que des disjoncteurs. Il comporte à cet effet un châssis à fixer à une paroi murale, un à quatre rails de montage à fixer horizontalement sur le châssis, et un capot de fermeture.

Les rails de montage sont prévus pour supporter les appareillages électriques modulaires. Le capot de fermeture est quant à lui conçu pour protéger ces appareillages électriques modulaires. Il comporte à cet effet généralement une paroi avant plane présentant des ouvertures d'accès aux appareillages électriques modulaires portés par les rails de montage, et une paroi latérale agencée pour se fixer au châssis.

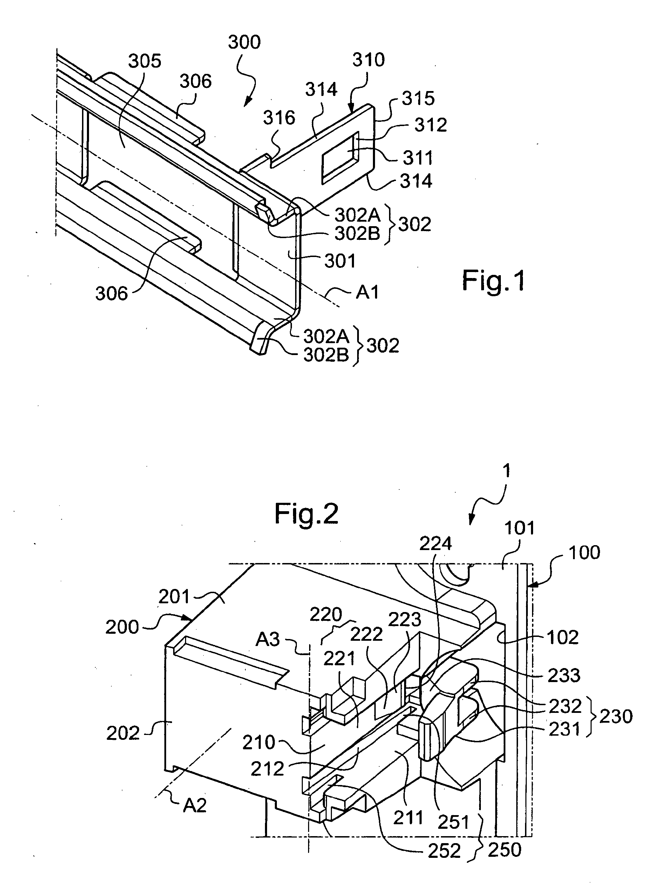

Sur la figure 1 est représentée une extrémité de l'un des rails de montage 300 du coffret ou tableau de distribution électrique.

Comme le montre cette figure, ce rail de montage 300 se présente sous la forme d'un profilé métallique. Il comporte plus précisément une paroi principale 301 plane et rectangulaire, qui est allongée suivant un axe de montage A1 et dont les deux bords latéraux sont repliés vers l'avant du rail de montage 300 pour former deux ailes latérales 302. Ces ailes latérales 302 présentent chacune une section transversale en L, avec une partie 302A qui s'élève à partir de la paroi principale 301, orthogonalement à celle-ci, et une partie 302B repliée à angle droit vers l'extérieur du rail de montage 300.

Sur la figure 2 est représentée une partie du châssis 1 du coffret ou tableau de distribution électrique.

Comme cela apparaît sur les figures 2 à 4, ce châssis 1 comporte un socle 100 ici formé de deux longerons 101 (dont une seul d'entre eux est en partie visible) agencés pour être fixés verticalement et côte-à-côte sur la paroi murale, de telle manière que les rails de montage 300 puissent s'étendre horizontalement entre ces deux longerons 101.

Ce châssis 1 comporte une à quatre paire(s) de supports de rail 200 qui s'élèvent à partir des longerons 101 du socle 100 pour former des appuis pour les extrémités du ou des rail(s) de montage 300.

Dans la suite de cet exposé, on s'intéressera plus particulièrement à l'un de ces supports de rail 200, ainsi qu'à l'extrémité du rail de montage 300 agencée pour se fixer à ce support de rail 200.

Telle que représentée sur la figure 1, cette extrémité du rail de montage 300 comporte une languette 310 issue d'une première opération de découpe d'une ouverture principale 305 dans la paroi principale 301 du rail de montage 300 et d'une seconde opération de pliage de cette languette 310 à angle droit vers l'arrière du rail de montage 300. Cette ouverture 305 et cette languette 310 sont découpées de manière à permettre de fixer rigidement le rail de montage 300 sur le support de rail 200.

Ce support de rail 200 comporte en correspondance :
- un montant 201 globalement parallélépipédique qui s'élève à partir du socle 100 du châssis 1 suivant un axe longitudinal A2 pour maintenir le rail de montage 300 à distance du fond du châssis 1,
- des moyens d'encliquetage 220 agencés pour s'accrocher à cette languette 310 et pour la maintenir fixement contre le montant 201, et
- un levier de manoeuvre 230 agencé pour manoeuvrer les moyens d'encliquetage 220.

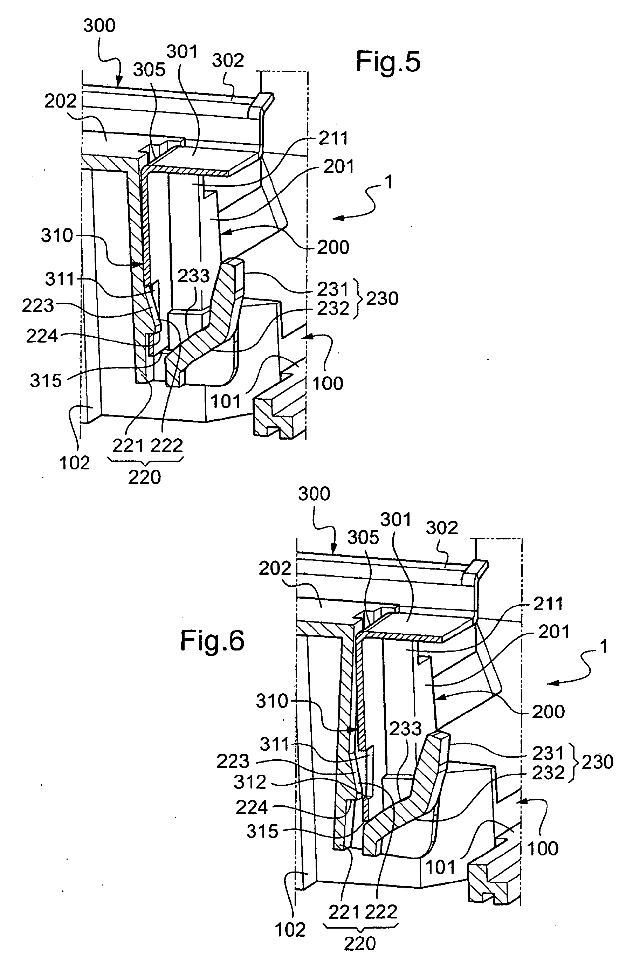

Ce levier de manoeuvre 230 est en particulier monté mobile sur le montant 201 du support de rail 200 entre une position de repos (figure 5) dans laquelle les moyens d'encliquetage 220 sont en position pour fixer la languette 310 du rail de montage 300 sur le montant 201 du châssis 1, et une position d'activation (figure 6) dans laquelle les moyens d'encliquetage 220 sont en position pour libérer cette languette 310.

L'idée sous-tendant la présente invention est alors d'éviter, lorsque le levier de manoeuvre 230 est successivement déplacé depuis sa position de repos jusqu'à sa position d'activation puis relâché vers sa position de repos, que les moyens d'encliquetage 220 ne viennent automatiquement se raccrocher à la languette 310 du rail de montage 300. Ainsi, grâce à l'invention, il est possible d'extraire le rail de montage 300 du châssis 1 en deux opérations distinctes et successives consistant à, dans un premier temps, manoeuvrer le levier de manoeuvre 230, puis à, dans un second temps seulement, simplement tirer le rail de montage 300 à distance du châssis 1. Ces deux opérations n'étant pas supposées être réalisées simultanément, elles sont particulièrement aisées à mettre en oeuvre.

Pour ce faire, selon une caractéristique particulièrement avantageuse du châssis 1 selon l'invention, le support de rail 200 comporte une rampe d'éjection 233 qui est fixée au levier de manoeuvre 230 de manière à venir en appui contre la languette 310 du rail de montage 300 pour l'éjecter à la faveur d'un mouvement du levier de manoeuvre 230 depuis sa position de repos jusqu'à sa position d'activation.

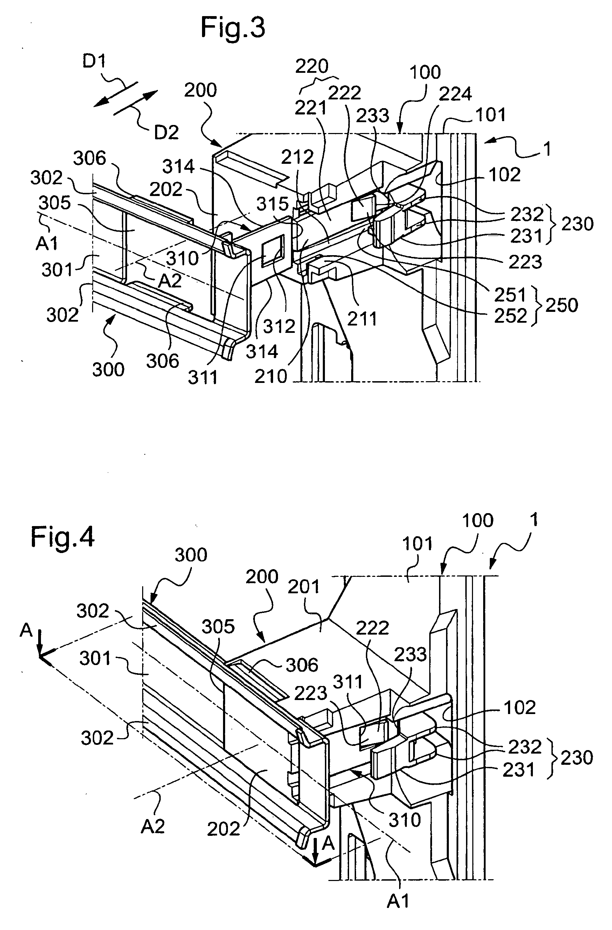

Ici, comme le montrent les figures 2 et 3, le montant 201 définit un logement d'accueil 210 agencé pour loger la languette 310 du rail de montage 300 lorsque celle-ci est fixée par les moyens d'encliquetage 220.

Ce logement d'accueil 210 est ici non seulement conçu pour accueillir la languette 310 du rail de montage 300, mais également pour la guider vers le fond de ce logement d'accueil.

Il est formé par un renfoncement prévu sur l'une des faces latérales du montant 201, celle tournée vers l'extérieur du châssis 1.

Ce logement d'accueil 210 est donc ouvert vers l'extérieur du châssis 1 et est délimité par trois parois latérales, dont une première paroi 212 orientée vers l'extérieur du châssis 1 et deux parois latérales 211 orientées l'une vers l'autre. Le logement d'accueil 210 est par ailleurs ouvert vers l'avant du châssis 1 pour accueillir la languette 310 du rail de montage 300. Il débouche en outre ici vers l'arrière du châssis 1 au travers d'une fenêtre 102 pratiquée dans le longeron 101 correspondant du socle 100 du châssis 1.

Comme le montre plus particulièrement la figure 2, ce logement d'accueil 210 comporte des moyens de guidage 250 en translation de la languette 310 du rail de montage 300 permettant d'assurer un positionnement optimal de cette languette 310 par rapport aux moyens d'encliquetage 220 du support de rail 200.

Ces moyens de guidage 250 comportent deux premières rainures 251 parallèles à l'axe longitudinal A2, situées en vis-à-vis dans les deux parois latérales 211 délimitant le logement d'accueil 210. Ces deux premières rainures 251 sont ouvertes l'une vers l'autre pour former deux rails d'accueil des tranches 314 de la languette 310 du rail de montage 300. Elles sont ici situées à l'arrière du logement d'accueil 210 pour accueillir les extrémités des tranches 314 de la languette 310 du rail de montage 300.

Chacune de ces deux premières rainures 251 présente en particulier deux faces en vis-à-vis légèrement inclinées l'une par rapport à l'autre d'un angle de dépouille non nul. Grâce à cet angle de dépouille, les deux rainures 251 s'ouvrent vers l'avant du châssis 1 pour faciliter les opérations de démoulage du support de rail 200. Cet angle de dépouille permet également de faciliter l'insertion des tranches 314 de la languette 310 dans les premières rainures 251 du logement d'accueil 210.

L'inconvénient de cet angle de dépouille est, on le comprend, que la languette 310 du rail de montage 300 n'est maintenue en position par ces deux premières rainures 251 que sur une longueur réduite.

Pour renforcer ce maintien, les moyens de guidage 250 de la languette 310 comportent alors ici deux secondes rainures 252 supplémentaires, parallèles à l'axe longitudinal A2, situées en vis-à-vis sur les deux parois latérales 211 délimitant le logement d'accueil 210 et ouvertes l'une vers l'autre.

Ces deux secondes rainures 252 s'étendent à partir de l'extrémité avant du montant 201, sur une longueur réduite compte tenu également de l'angle de dépouille qui ne permet pas aux rainures de maintenir la languette 310 sur l'ensemble de leurs longueurs.

L'écart entre les deux secondes rainures 252 est ici strictement supérieur à l'écart entre les deux premières rainures 251. Afin de pouvoir s'engager dans ces premières et secondes rainures 251, 252, la languette 310 présente alors un rétrécissement de largeur depuis son bord d'extrémité rattachée à la paroi principale 301 du rail de montage 300 vers son bord d'extrémité libre 315 opposé. Ses tranches 314 présentent ainsi chacune un épaulement 316 agencé pour s'appuyer contre le fond de la seconde rainure 252 correspondante du montant 201 du support de rail 200.

En conséquence, les premières et secondes rainures 251, 252 permettent de guider la languette 310 dans le logement d'accueil 210 du montant 201, suivant une direction d'engagement D2 parallèle à l'axe longitudinal A2. Une fois la languette 310 engagée au fond du logement d'accueil 210, les premières et secondes rainures 251, 252 permettent en outre de bloquer toute mobilité de translation du rail de montage 300 par rapport au support de rail 200, hormis sa mobilité de translation pour s'extraire du logement d'accueil 210 suivant une direction d'éjection D1 opposée à ladite direction d'engagement D2.

Comme le montre la figure 2, les moyens d'encliquetage 220 sont alors conçus pour bloquer cette dernière mobilité de translation.

Ils comportent plus particulièrement ici une patte élastiquement déformable 221 qui porte une dent d'encliquetage 222.

Cette patte élastiquement déformable 221 est découpée dans la première paroi 212 du logement 210 du montant 201 du support de rail 200. Elle présente un bord d'extrémité avant qui est rattaché à la première paroi 212 du logement d'accueil 210 et qui forme une charnière de pivotement autour d'un axe de pivot A3 orthogonal à l'axe longitudinal A2.

La dent d'encliquetage 222 est quant à elle située sur la face de cette patte élastiquement déformable 221 qui est tournée vers l'intérieur du logement d'accueil 210.

Au repos, la patte élastiquement déformable 221 s'étend dans le plan de la première paroi 212 du logement 210. De cette manière, au repos, la dent d'encliquetage 222 s'étend en saillie de la première paroi 212 du logement d'accueil 210.

Cette dent d'encliquetage 222 présente une section longitudinale en forme de triangle rectangle pour délimiter, sur un côté, un bord d'appui 224 tourné vers l'arrière du châssis 1, et, sur l'autre, une rampe 223 tournée vers l'extérieur et vers l'avant du châssis 1.

Grâce à cette forme, lorsque la languette 310 du rail de montage 300 s'engage dans le logement d'accueil 210 du montant 201 du support de rail 200, la languette 310 glisse sur la rampe 223, ce qui provoque la déformation de la patte élastiquement déformable 221 qui s'efface ainsi pour laisser libre accès à la languette 310 du rail de montage 300.

Pour coopérer avec la dent d'encliquetage 222 de la patte élastiquement déformable 221, la languette 310 du rail de montage 300 comporte une ouverture médiane 311 de forme rectangulaire. Cette ouverture médiane 311 est délimitée par quatre bords dont l'un d'entre eux, appelé bord d'appui 312, est orienté vers l'avant du rail de montage 300.

Ce bord d'appui 312 est situé sur la languette 310 en une position telle que, lorsque la languette 310 est engagée au fond du logement d'accueil 210, la dent d'encliquetage 222 s'engage dans l'ouverture médiane 311 et la patte élastiquement déformable 221 revient en position de repos. De cette manière, le bord d'appui 224 de la dent d'encliquetage 222 s'accroche au bord d'appui 312 de l'ouverture médiane 311, ce qui bloque rigidement la languette 310 du rail de montage 300 dans le logement d'accueil 210 du support de rail 200.

Comme le montrent les figures 2 à 6, le levier de manoeuvre 230 est agencé pour débloquer la languette 310, en exerçant sur la patte élastiquement déformable 221 un effort suffisant pour sortir la dent d'encliquetage 222 de son ouverture médiane 311. Ainsi sortie, cette dent d'encliquetage 222 ne forme plus obstacle à l'extraction de la languette 310 hors du logement d'accueil 210 du montant 201 du support de rail 200.

Ce levier de manoeuvre 230 comporte à cet effet une partie d'appui 231 accessible au doigt de l'installateur, et une partie de jonction 232 qui raccorde cette partie d'appui 231 à la patte élastiquement déformable 221.

La partie d'appui se présente ici sous la forme d'une plaquette 231 s'étendant en parallèle et en regard de la patte élastiquement déformable 221.

La partie de liaison se présente quant à elle ici sous la forme de deux nervures rigides 232 s'étendant entre l'extrémité arrière de la plaquette 231 et l'extrémité libre de la patte élastiquement déformable 221. Ces deux nervures rigides 232 s'étendent plus précisément parallèlement et à distance l'une de l'autre, à partir des tranches latérales de la plaquette 231.

La rampe d'éjection 233 permettant d'éjecter la languette 310 du rail de montage 300 hors du logement d'accueil 210 du support de rail 200 est ici portée par ces deux nervures rigides 232.

Comme le montrent plus particulièrement les figures 2 et 5, cette rampe d'éjection 233 est formée par une paroi plane qui s'étend entre ces deux nervures rigides 232, depuis la plaquette 231 en direction de la patte élastiquement déformable 221. En variante, cette rampe d'éjection pourrait être simplement formée par les faces avant de ces deux nervures rigides.

Quoi qu'il en soit, cette rampe d'éjection 233 est ainsi située au fond du logement d'accueil 210, en une position telle qu'elle vient en appui contre le bord d'extrémité libre 315 de la languette 310 du rail de montage 300 seulement lorsque le levier de manoeuvre 230 est déplacé depuis sa position de repos (figure 5) vers sa position d'activation (figure 6).

Pour assurer une éjection optimale de la languette 310 du rail de montage 300, cette rampe d'éjection 233 est ici inclinée par rapport à l'axe longitudinal A2 d'un angle égal à 45 degrés. Elle pourrait également être inclinée d'un angle différent, préférentiellement compris entre 15 et 75 degrés.

Comme le montre la figure 2, ici, le support de rail 200 comporte des moyens supplémentaires de maintien du rail de montage 300 sur le montant 201.

Ces moyens supplémentaires de maintien sont formés par l'extrémité libre avant 202 du montant 201 elle-même.

Cette extrémité libre avant 202 présente à cet effet une forme identique, en négatif, à celle de l'ouverture principale 305 pratiquée dans la paroi principale 301 du rail de montage 300.

Ainsi, lorsque la languette 310 du rail de montage 300 est engagée au fond du logement d'accueil 210 du montant 201, l'extrémité libre avant 202 du montant 201 se positionne dans l'ouverture principale 305, ce qui participe au blocage du rail de montage 300 sur le support de rail 200.

Comme le montre plus particulièrement la figure 1, l'ouverture principale 305 du rail de montage 300 présente ici une forme de rectangle s'étendant en longueur suivant l'axe A1 du rail de montage 300. Elle présente une largeur égale à celle de la paroi principale 301 du rail de montage 300. Comme le montre la figure 2, l'extrémité libre avant 202 du montant 201 présente alors une forme également rectangulaire de dimensions égales, au jeu près, aux dimensions de l'ouverture principale 305.

Comme cela a été exposé supra et en référence à la figure 1, la languette 310 est découpée dans la paroi principale 301 du rail de montage 300 puis pliée à angle droit pour faire apparaître l'ouverture principale 305. Le rétrécissement de largeur de la languette 310 laisse alors apparaître sur les deux côtés longitudinaux de l'ouverture principale 305 deux lames qui, repliées vers l'arrière du rail de montage 300, forment deux bords tombants 306.

Pour accueillir ces deux bords tombants 306, le montant 201 du support de rail 200 comporte, en renfoncement sur deux faces latérales opposées, deux encoches 206 qui débouchent sur sa face d'extrémité libre et qui présentent des dimensions égales, au jeu près à celles des bords tombants 306.

Ces encoches 206 permettent ainsi en particulier de bloquer la translation du rail de montage 300 suivant la direction d'engagement D2 lorsque la languette 310 arrive au fond du logement 210 du montant 201 du support de rail 200.

Avantageusement, chaque longeron 101 du socle 100 du châssis 1 est formé d'une seule pièce par moulage d'une matière plastique isolante. Chaque rail de montage 300 est par ailleurs formé d'une seule pièce par découpe et pliage d'un feuillard métallique.

L'assemblage du rail de montage 300 (équipé de ses appareillages électriques modulaires) sur le châssis 1 du coffret de distribution électrique est réalisé en une seule et unique opération.

Cette opération consiste pour l'installateur à rapporter le rail de montage 300 sur le châssis 1 de telle manière que ses deux languettes 310 s'engagent dans les logements d'accueil 210 des deux supports de rail 200 correspondant du châssis 1 et que les moyens d'encliquetage 220 des supports de rail 200 s'accrochent aux ouvertures médianes 311 de ces languettes 310.

Dans cette position, comme le montre la figure 5, le rail de montage 300 est rigidement bloqué sur le châssis 1, prêt à être livré.

Une fois le châssis 1 livré, lorsque l'installateur souhaite connecter les appareillages électriques modulaires au réseau électrique local de l'habitation, il extrait ce rail de montage 300 du châssis 1. Cette extraction du rail est réalisée en deux opérations successives.

Au cours d'une première opération, l'installateur exerce un effort de pression sur les leviers de manoeuvre 230 des deux supports de rail 200. Cet effort de pression permet, d'une part, de déverrouiller les moyens de verrouillage 220 en sortant les dents d'encliquetage 222 portées par les pattes élastiquement déformable 221 hors des ouvertures médianes 311 des languettes 310 du rail de montage, et, d'autre part, d'éjecter ces languettes 310 hors de leurs logements d'accueil 210.

En effet, comme le montre la figure 6, lorsque les leviers de manoeuvre 230 sont déplacés depuis leur position de repos vers leur position d'activation, leurs rampes d'éjection 233 viennent appuyer contre les bords d'extrémité libre 315 des languettes 310, ce qui extrait en partie ces languettes 310 hors de leurs logements d'accueil 210. Ainsi, lorsque l'installateur relâche les leviers de manoeuvre 230, les ouvertures médianes 311 des languettes 310 du rail de montage 300 ne sont plus situées en regard des dents d'encliquetage 222, si bien que ces dents d'encliquetage 222 ne peuvent plus s'accrocher à ces ouvertures médianes 311.

Par conséquent, au cours d'une seconde opération, il suffit à l'installateur d'exercer un effort de traction sur le rail de montage 300 pour extraire totalement ses languettes 310 hors de leurs logements d'accueil 210.

Ainsi démonté, le rail de montage 300 facilite alors le branchement des appareillages électriques modulaires qu'il porte.

La présente invention n'est nullement limitée aux modes de réalisation décrits et représentés, mais l'homme du métier saura y apporter toute variante conforme à son esprit.

En particulier, on pourrait prévoir que la rampe d'éjection soit située non pas au fond du logement d'accueil mais plutôt sur un côté de ce logement d'accueil, auquel cas elle serait agencée pour coopérer non pas avec le bord d'extrémité de la languette du rail de montage mais plutôt avec un épaulement prévu sur la tranche de cette languette.

On pourrait par ailleurs prévoir que la rampe ne soit pas rigidement fixée au levier de manoeuvre. On pourra par exemple prévoir qu'elle soit au contraire articulée sur le levier de manoeuvre, de telle manière que le déplacement de ce levier de manoeuvre entraîne le pivotement de la rampe et induise ainsi l'extraction de la languette hors de son logement d'accueil.

Enfin, tels que représentés sur les figures, les supports de rail viennent de formation avec les longerons du socle du châssis. En variante, on pourra prévoir que ces supports de rails forment des éléments distincts des longerons, rapportés sur ces derniers par des moyens de vissage ou d'encliquetage.

## Revendications

1. Châssis (1) de coffret ou tableau de distribution électrique, comprenant deux supports de rail (200) qui comportent chacun :
- des moyens d'encliquetage (220) comportant une surface d'accroche (224) adaptée à coopérer avec une surface d'appui (312) d'une languette (310) d'un rail de montage (300) d'appareillages électriques modulaires pour fixer ladite languette (310) au châssis (1), et
- un levier de manoeuvre (230) mobile entre une position de repos dans laquelle les moyens d'encliquetage (220) sont en position pour fixer ladite languette (310) au châssis (1) et une position d'activation dans laquelle les moyens d'encliquetage (220) sont en position pour libérer ladite languette (310), **caractérisé en ce qu'**il comporte une rampe d'éjection (233) solidarisée audit levier de manoeuvre (230) de manière à venir en appui contre ladite languette (310) à la faveur d'un mouvement du levier de manoeuvre (230) depuis sa position de repos jusqu'à sa position d'activation, pour déplacer ladite surface d'appui (312) de la languette (310) et prévenir toute coopération entre cette surface d'appui (312) et ladite surface d'accroche (224) des moyens d'encliquetage (220).

2. Châssis (1) selon la revendication 1, dans lequel ladite rampe d'éjection (233) est inclinée par rapport à la direction d'éjection (D1) de la languette (310) d'un angle compris entre 15 et 75 degrés, préférentiellement égal à 45 degrés.

3. Châssis (1) selon l'une des revendications 1 et 2, dans lequel ladite rampe d'éjection (233) est agencée pour coopérer avec un bord correspondant de ladite languette (310).

4. Châssis (1) selon l'une des revendications 1 à 3, dans lequel lesdits moyens d'encliquetage comportent une patte élastiquement déformable (221) équipée d'une dent d'encliquetage (222) qui porte ladite surface d'accroche (224).

5. Châssis (1) selon la revendications 4, dans lequel il est prévu une partie de jonction (232) qui relie ledit levier de manoeuvre (230) à ladite patte élastiquement déformable (221) et qui porte ladite rampe d'éjection (233).

6. Châssis (1) selon l'une des revendications 1 à 5, dans lequel il est prévu des moyens de guidage (250) de ladite languette (310) jusqu'aux moyens d'encliquetage (220).

7. Châssis (1) selon la revendication 6, dans lequel lesdits moyens de guidage (250) comportent au moins deux rainures (251) parallèles ouvertes en regard l'une de l'autre pour former deux rails d'accueil des tranches (314) de la languette (310) du rail de montage (300).

8. Coffret ou tableau de distribution électrique comportant au moins un rail de montage (300) d'appareillages électriques modulaires équipé de deux languettes (310), **caractérisé en ce qu'**il comporte un châssis (1) selon l'une des revendications 1 à 7, dont les moyens d'encliquetage (220) fixent lesdites languettes (310) au châssis (1).

9. Coffret ou tableau de distribution électrique selon la revendication 8, dans lequel lesdites languettes (310) comportent chacune une ouverture médiane (311) dont un bord d'appui (312) définit ladite surface d'appui.

10. Coffret ou tableau de distribution électrique selon l'une des revendications 8 et 9, dans lequel lesdites languettes (310) s'étendent dans un plan orthogonal à l'axe longitudinal du rail de montage (300).

11. Coffret ou tableau de distribution électrique selon l'une des revendications 8 à 10, dans lequel chaque support de rail (200) comporte des moyens de blocage des mobilités de translation du rail de montage (300) suivant les directions orthogonales à la direction d'éjection (D1) de la languette (310) et suivant la direction opposée à cette direction d'éjection (D1).

12. Coffret ou tableau de distribution électrique selon l'une des revendications 8 à 11, dans lequel lesdites languettes (310) sont issues de la découpe de deux ouvertures principales (305) dans une partie plane (301) du rail de montage (300).

13. Coffret ou tableau de distribution électrique selon les revendications 11 et 12, dans lequel le châssis (1) comporte un socle (101) sensiblement plat à partir duquel s'élèvent lesdits supports de rail (200), et dans lequel chaque support de rail (200) comporte une extrémité libre qui est engagée dans l'ouverture principale (305) correspondante du rail de montage (300) de manière à bloquer lesdites mobilités de translation du rail de montage (300).

14. Coffret ou tableau de distribution électrique selon l'une des revendications 8 à 13 comportant un châssis selon la revendication 7, dans lequel chaque languette (310) présente une première partie rattachée au reste du rail de montage (300) et une partie d'extrémité libre de largeur moindre, et dans lequel les moyens de guidage (250) prévus sur chaque support de rail (200) comportent une première paire de rainures (251) formant deux rails d'accueil des tranches de la partie d'extrémité libre de la languette (310), et une seconde paire de rainures (251) formant deux rails d'accueil des tranches de la première partie de la languette (310).

## Patentansprüche

1. Gestell (1) für elektrischen Verteilerkasten oder elektrische Verteilertafel mit zwei Schienenhaltern (200), die jeweils umfassen:
- Einrastmittel (220) mit einer zum Zusammenwirken mit einer Auflagefläche (312) eines Flachsteckers (310) einer Montageschiene (300) für modulare elektrische Geräte geeigneten Einhängefläche (224), um den Flachstecker (310) am Gestell (1) zu fixieren, und
- einen Betätigungshebel (230), der zwischen einer Ruheposition, in der die Einrastmittel (220) in Position sind, um den Flachstecker (310) am Gestell (1) zu fixieren, und einer aktivierten Position, in der die Einrastmittel (220) in Position sind, um den Flachstecker (310) freizugeben, hin und her bewegt werden kann, **dadurch gekennzeichnet, dass** es eine derart mit dem Betätigungshebel (230) verbundene Auswurframpe (233) umfasst, dass sie am Flachstecker (310) zum Aufliegen kommt und es dadurch zu einer Bewegung des Betätigungshebels (230) von seiner Ruheposition in seine Aktivierungsposition kommt, um die Auflagefläche (312) des Flachsteckers (310) zu verschieben und jedes Zusammenwirken zwischen dieser Auflagefläche (312) und der Einhängefläche (224) der Einrastmittel (220) zu verhindern.

2. Gestell (1) nach Anspruch 1, bei dem diese Auswurframpe (233) in Bezug zur Auswurfrichtung (D1) des Flachsteckers (310) um einen Winkel zwischen 15 und 75 Grad geneigt ist, vorzugsweise um 45 Grad.

3. Gestell (1) nach einem der Ansprüche 1 und 2, bei dem die Auswurframpe (233) angeordnet ist, um mit einem entsprechenden Rand des Flachsteckers (310) zusammenzuwirken.

4. Gestell (1) nach einem der Ansprüche 1 bis 3, bei dem die Einrastmittel eine elastisch verformbare Lasche (221) umfassen, die mit einem Einrastzahn (222) versehen ist, auf dem sich die Einhängefläche (224) befindet.

5. Gestell (1) nach Anspruch 4, bei dem ein Verbindungsbereich (232) vorgesehen ist, der den Betätigungshebel (230) mit der elastisch verformbaren Lasche (221) verbindet und in dem sich die Auswurframpe (233) befindet.

6. Gestell (1) nach einem der Ansprüche 1 bis 5, bei dem für den Flachstecker (310) bis zu den Einrastmitteln (220) Führungsmittel (250) vorgesehen sind.

7. Gestell (1) nach Anspruch 6, bei dem die Führungsmittel (250) mindestens zwei zueinander offene und parallele Rillen (251) umfassen, um zwei Aufnahmeschienen für die Ränder (314) des Flachsteckers (310) der Montageschiene (300) zu bilden.

8. Elektrischer Verteilerkasten bzw. elektrische Verteilertafel mit mindestens einer Montageschiene (300) für modulare elektrische Geräte und mit zwei Flachsteckern (310) versehen, **dadurch gekennzeichnet, dass** er/sie ein Gestell (1) nach einem der Ansprüche 1 bis 7 umfasst, dessen Einrastmittel (220) diese Flachstecker (310) am Gestell (1) fixieren.

9. Elektrischer Verteilerkasten bzw. elektrische Verteilertafel nach Anspruch 8, bei dem/der die Flachstecker (310) jeweils eine mittlere Öffnung (311) umfassen, deren Auflagerand (312) die Auflagefläche definiert.

10. Elektrischer Verteilerkasten bzw. elektrische Verteilertafel nach einem der Ansprüche 8 und 9, bei dem/der sich die Flachstecker (310) in einer zur Längsachse der Montageschiene (300) orthogonalen Ebene erstrecken.

11. Elektrischer Verteilerkasten bzw. elektrische Verteilertafel nach einem der Ansprüche 8 bis 10, bei dem/der jeder Schienenhalter (200) Mittel zum Sperren der Verschiebungsmöglichkeiten der Montageschiene (300) in zur Auswurfrichtung (D1) des Flachsteckers (310) orthogonalen Richtungen und zur Auswurfrichtung (D1) entgegengesetzten Richtung umfasst.

12. Elektrischer Verteilerkasten bzw. elektrische Verteilertafel nach einem der Ansprüche 8 bis 11, bei dem/der die Flachstecker (310) aus dem Zuschneiden von zwei Hauptöffnungen (305) in einem flachen Abschnitt (301) der Montageschiene (300) hervorgehen.

13. Elektrischer Verteilerkasten bzw: elektrische Verteilertafel nach den Ansprüchen 11 und 12, bei dem/der das Gestell (1) einen annähernd ebenen Sockel (101) umfasst, von dem ausgehend sich die Schienenhalter (200) erheben, und bei dem/der jeder Schienenhalter (200) ein freies Ende umfasst, das derart in die entsprechende Hauptöffnung (305) der Montageschiene (300) eingreift, dass die Verschiebungsmöglichkeiten der Montageschiene (300) blockiert werden.

14. Elektrischer Verteilerkasten bzw. elektrische Verteilertafel nach einem der Ansprüche 8 bis 13 mit einem Gestell nach Anspruch 7, bei dem/der jeder Flachstecker (310) einen ersten mit dem Rest der Montageschiene (300) verbundenen Abschnitt und ein freies, schmaleres Ende aufweist, und bei dem/der die an jedem Schienenhalter (200) vorgesehenen Führungsmittel (250) ein erstes Rillenpaar (251) umfassen, die zwei Aufnahmeschienen für die Ränder des freien Endes des Flachsteckers (310) bilden, sowie ein zweites Rillenpaar (251), die zwei Aufnahmeschienen für die Ränder des ersten Flachsteckerabschnitts (310) bilden.

## Claims

1. A frame (1) of an electrical panel or box, including two rail supports (200) that each comprise:
· snap-fastener means (220) including a catch surface (224) that is adapted to co-operate with a bearing surface (312) of a tab (310) of a mounting rail (300) for mounting modular electrical equipment, so as to fasten said tab (310) to the frame (1); and
· an operating lever (230) that is movable between a rest position in which the snap-fastener means (220) are in a position for fastening said tab (310) to the frame (1), and an activated position in which the snap-fastener means (220) are in a position for releasing said tab (310);
said frame being **characterized in that** it includes an ejection ramp (233) that is secured to said operating lever (230) in such a manner as to come to bear against said tab (310) as a result of the operating lever (230) moving from its rest position to its activated position, so as to move said bearing surface (312) of the tab (310) and prevent any co-operation between the bearing surface (312) and said catch surface (224) of the snap-fastener means (220).

2. A frame (1) according to claim 1, wherein said ejection ramp (233) slopes relative to the ejection direction (D1) of the tab (310) by an angle lying in the range 15° to 75°, preferably equal to 45°.

3. A frame (1) according to claim 1 or claim 2, wherein said ejection ramp (233) is arranged so as to co-operate with a corresponding edge of said tab (310).

4. A frame (1) according to any one of claims 1 to 3, wherein said snap-fastener means comprise an elastically-deformable tab (221) that is fitted with a snap-fastener tooth (222) that carries said catch surface (224).

5. A frame (1) according to claim 4, wherein a junction portion (232) is provided that connects said operating lever (230) to said elastically-deformable tab (221), and that carries said ejection ramp (233).

6. A frame (1) according to any one of claims 1 to 5, wherein guide means (250) are provided for guiding said tab (310) to the snap-fastener means (220).

7. A frame (1) according to claim 6, wherein said guide means (250) comprise at least two parallel open grooves (251) that face each other so as to form two reception rails for receiving edge faces (314) of the tab (310) of the mounting rail (300).

8. An electrical panel or box including at least one mounting rail (300) for mounting modular electrical equipment, fitted with two tabs (310), said electrical panel or box being **characterized in that** it includes a frame (1) according to any one of claims 1 to 7, having snap-fastener means (220) that fasten said tabs (310) to the frame (1).

9. An electrical panel or box according to claim 8, wherein each of said tabs (310) includes a middle opening (311) having a bearing edge (312) that defines said bearing surface.

10. An electrical panel or box according to claim 8 or claim 9, wherein said tabs (310) extend in a plane that is orthogonal to the longitudinal axis of the mounting rail (300).

11. An electrical panel or box according to any one of claims 8 to 10, wherein each rail support (200) includes blocking means for preventing the mounting rail (300) from moving in translation along directions that are orthogonal to the ejection direction (D1) of the tab (310), and along the direction that is opposite to the ejection direction (D1).

12. An electrical panel or box according to any one of claims 8 to 11, wherein said tabs (310) result from cutting out two main openings (305) in a plane portion (301) of the mounting rail (300).

13. An electrical panel or box according to claim 11 and claim 12, wherein the frame (1) includes a base (101) that is substantially flat and from which said rail supports (200) project, and wherein each rail support (200) includes a free end that is engaged in the corresponding main opening (305) of the mounting rail (300), so as to prevent the mounting rail (300) from moving in translation along said directions.

14. An electrical panel or box according to any one of claims 8 to 13 and including a frame according to claim 7, wherein each tab (310) presents a first portion that is attached to the remainder of the mounting rail (300), and a free end portion of width that is narrower, and wherein the guide means (250) that are provided on each rail support (200) include a first pair of grooves (251) that form two reception rails for receiving edge faces of the free end portion of the tab (310), and a second pair of grooves (251) that form two reception rails for receiving edge faces of the first portion of the tab (310).
